# EUROPEAN PATENT SPECIFICATION

(11) **EP 4 487 447 B1**
(45) Date of publication and mention of the grant of the patent: **18.11.2026**
(21) Application number: 23723875.3
(22) Date of filing: 28.04.2023
(51) Int. Cl.: H02J 7/00, H02J 7/36

(54) **ENERGY STORAGE SYSTEM**
ENERGIESPEICHERSYSTEM
SYSTÈME DE STOCKAGE D'ÉNERGIE

(30) Priority: 03.05.2022 GB 202206453
(43) Date of publication of application: 08.01.2025
(73) Proprietor: Siemens Energy Global GmbH & Co. KG, 81739 München (DE)
(72) Inventor: HAUGAN, Espen, 7052 Trondheim (NO)
(86) International application number: PCT/EP2023/061339
(87) International publication number: WO 2023/213726

(56) References cited:
- DE-A1- 10 157 859
- KR-B1- 101 273 820
- US-A1- 2005 206 348
- SABZEHGAR REZA ET AL: "Modelling and sliding-mode control of a single-phase single-stage converter with application to plug-in electric vehicles", IET POWER ELECTRONICS, IET, UK, vol. 12, no. 3, 20 March 2019 (2019-03-20), pages 620 - 626, XP006083902, ISSN: 1755-4535, DOI: 10.1049/IET-PEL.2018.5664

## Description

The present disclosure relates to an energy storage system, in particular for storage of electrical energy for a vessel, vehicle, aircraft, or data centre and to a method of operating such a system.

Electrical energy storage is already widely used for vehicles and is becoming more widely used, in shipping. In future, electrical energy storage may become more common in other applications, such as aircraft propulsion, uninterruptable power supplies, data centres, or any application involving intermittent renewable energy sources. In such applications, there may be multiple energy storage units, which may be operated over long periods of time, leading to gradual degradation of performance of some, or all of the units. It is desirable to provide an improved energy storage system. Relevant prior art can be found in DE 101 57 859 A1, US 2005/206348 A1, the article SABZEHGAR REZA ET AL: "Modelling and sliding-mode control of a single-phase single-stage converter with application to plug-in electric vehicles", published in lET POWER ELECTRONICS, IET, UK, vol. 12, no. 3, 20 March 2019, or in KR 101 273 820 B1.

In accordance with a first aspect of the present invention, an electrical energy storage system comprises a plurality of primary energy storage units, each primary energy storage unit comprising an inherent internal resistance; and one or more additional energy storage units, at least one additional energy storage unit further comprising a pseudo resistance; the system further comprising one or more controllers, for controlling charging and discharging of each of the primary and additional energy storage units; whereby control of charging and discharging of the or each additional energy storage unit comprising a pseudo resistance is distinguished from charging and discharging of each primary energy storage unit, and is distinguished from charging and discharging of any additional energy storage unit that lacks a pseudo resistance.

As the inherent inner or internal resistance of the energy storage units changes over time, due to aging and treatment during charging/discharging cycles, a new energy storage unit with the same nominal voltage as a used energy storage unit is likely to have a different internal resistance to a well-used energy storage unit. This problem is addressed by the provision of a pseudo resistance in newer units to allow the controller to use and treat the energy storage units that are old, differently from those that are new or newer, to optimise the overall performance of the energy storage system.

Each energy storage unit may comprise two or more energy storage modules, each energy storage module contributing to the inherent internal resistance of the energy storage unit.

Each additional energy storage unit may comprise two or more energy storage modules, each energy storage module contributing to the inherent internal resistance of its additional energy storage unit.

Each energy storage module may comprise two or more energy storage devices, each energy storage device contributing to the inherent internal resistance of its energy storage module.

According to the invention the pseudo resistance comprises a switching device, the switching device comprising first and second elements in series with one another to form a switching combination; a capacitor connected across the switching combination; and a current limiter connected to a midpoint between the first and second elements.

The first element may comprise a semiconductor device in parallel with a diode.

The second element may comprise at least one of a diode, or a semiconductor device in parallel with a diode.

The energy storage system may further comprise galvanic isolation.

The galvanic isolation may comprise a step down transformer between a module bus or a system bus and the switching device.

The galvanic isolation may further comprise at least one pair of series connected elements on each side of the transformer, each element comprising a semiconductor device in parallel with a diode.

The galvanic isolation may further comprise a capacitor connected across the pair of series connected elements on the higher voltage side of the transformer.

The galvanic isolation may further comprise a filter between an external source and a higher voltage side of the transformer.

In accordance with a second aspect of the present invention, a method of operating an electrical energy storage system according to the first aspect comprises determining internal resistance of each primary energy storage unit; determining internal resistance of at least one of the additional energy storage units; selecting a pseudo resistance for the at least one additional energy storage unit, such that the combined internal resistance and pseudo resistance of the at least one additional energy storage unit is substantially equal to the internal resistance of each of the primary energy storage devices; and charging the primary and additional energy storage units.

The method may further comprise discharging and/or charging the additional energy storage units at a higher rate than discharging and/or charging the primary energy storage units.

An example of an energy storage system according to the present invention will now be described with reference to the accompanying drawings in which:
Figure 1 is a block diagram of an example of an energy storage system according to an embodiment of the present invention;
Figure 2 illustrates more detail of an example of part of the energy storage system of Fig 1;
Figure 3 illustrates a first example of an implementation of a pseudo resistance for the part of the energy storage system of Fig 2;
Figure 4 illustrates a second example of an implementation of a pseudo resistance for the part of the energy storage system of Fig 2;
Figure 5 illustrates a third example of an implementation of a pseudo resistance for the part of the energy storage system of Fig 2, with single direction operation, for charging only;
Figure 6 illustrates a fourth example of an implementation of a pseudo resistance for the part of the energy storage system of Fig 2;
Figure 7 illustrates a fifth example of an implementation of a pseudo resistance for the part of the energy storage system of Fig 2; and,
Figure 8 illustrates the example of Fig.5 modified for bidirectional operation, for charging and discharging.

Use of batteries for energy storage is becoming more common for the power systems of vessels, for example, in fully electric ferries carrying passengers or cargo over short distances, or as an auxiliary supply for longer distance vessels to avoid emissions when manoeuvring in harbours or environmentally sensitive areas. For fully electric ferries on regular crossings, typically a government or local authority licences a specific operator for a fixed length of time, to give the operator certainty with respect to the investment in equipment. The operator then contracts for a vessel to have sufficient energy storage units to provide the required power over the licensed operating period.

However, battery lifetime is affected by how the vessel is used and consequently how the energy storage is charged and discharged over its lifetime. The usage may depend on the weather conditions, loads per journey and other factors that are not wholly under the operator's control. Deviation from the assumptions used to determine the requirement for the vessel may result in the batteries aging faster than expected. In such a situation, the operator may wish to add sufficient additional energy storage units to continue to operate to the end of the contracted licence period. Alternatively, the batteries may not age as quickly as expected and if the operator is offered a contract extension, there may be a need to augment the remaining energy storage to meet the contract extension, which may not be for as long as the original contract term was. A straight swap, replacing all the energy storage units with new energy storage units would not be an efficient decision if the existing batteries still have some life in them.

Electrical energy storage is already in use for vehicles, for both fully electric and hybrid vehicles. The invention may also be applicable to vehicles, more particularly to heavy goods vehicles. Car owners typically change their vehicles quite often over the vehicle's lifetime, and given the greater space constraints in a car, than in a goods vehicle or vessel, a car owner is less likely to wish to augment existing energy storage systems and more likely to simply replace the existing battery pack entirely. Electrical energy storage is being trialled for the primary power source on aircraft, or for uninterruptible power supplies, e.g. for data centres, both of which may have similar requirements to vessel operators, to be able to upgrade by addition or replacement, a subset of the energy storage units.

In all these applications, the batteries age with time, as well as due to changes in the state of charge or due to the way they are operated. A battery that has aged for whatever reason may have a higher internal resistance than a new battery. In a typical energy storage system, in particular, for a vessel, aircraft, or data centre, energy storage units may be arranged in parallel to obtain sufficient total energy for the power requirement. Energy storage units typically comprise energy storage modules made up of multiple energy storage devices, or battery cells. This gives flexibility in providing the total required voltage supply for the vessel, vehicle, data centre, or aircraft. More batteries in more modules, in more units, results in a higher available voltage. Multiple strings of energy storage devices are combined to form the energy storage modules, with the batteries being arranged either in series or parallel, or a combination of both. Multiple energy storage modules may be connected in series to form an energy storage unit.

Power may be supplied from a single energy storage unit, but more commonly, from two or more energy storage units in parallel. Ageing of each energy storage unit as a function of time, assuming the units have been installed for the same length of time and had the same state of health at installation, is broadly similar. However, if the dimensioning battery power profile used to design the energy storage system initially and the actual usage power profile of the energy storage system, when in use, does not match, then the lifetime of the batteries in the energy storage units may turn out to be too short. This may require installation of additional energy storage units with batteries in parallel with the original units. Due to the different internal resistance between the old batteries, in the primary energy storage units and new batteries, in the additional energy storage units, it may be challenging to make the most efficient use of the additional power, when connecting in parallel with existing battery packs which have had a significantly different use profile.

Examples of embodiments which address these problems are illustrated in the accompanying figures. The present invention makes use of a pseudo internal resistance, in which power electronics components are used to generate a voltage drop in series with the additional energy storage units that are subsequently installed, for example on a vessel, or aircraft, or data centre, thereby enabling the different internal resistances of the additional energy storage and primary energy storage to be compensated for.

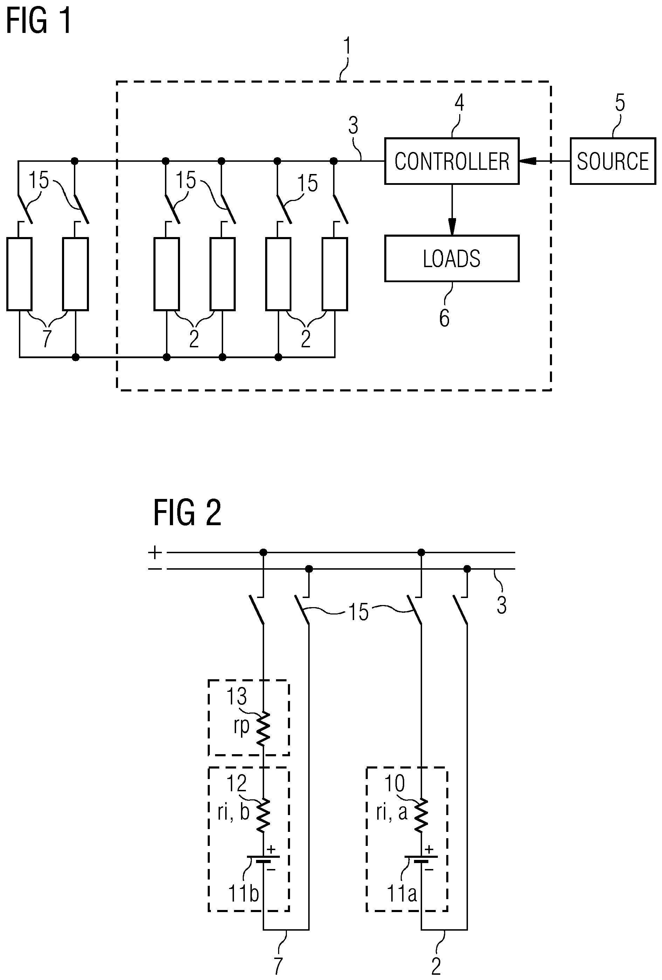

Fig.1 illustrates an example of an energy storage system 1 suitable for implementing the present invention. The system comprises a plurality of energy storage units 2 electrically connected in parallel via a bus 3 and controlled from a controller 4. Within each energy storage unit, energy storage modules comprising energy storage devices, or cells, connected together in series within each module, are provided. The controller not only controls charging of the energy storage units, or battery packs, from an external source 5, whether AC or DC, onboard, or onshore, but also controls the rate of discharge to loads 6, which for a vessel are typically split into propulsion and hotel loads. The bulk of the energy usage is for propulsion, but the actual requirement may change from day to day, depending on weather and sea conditions, as well as the weight of cargo or number of passengers on board. As described above, after the vessel has been operating for a period of time, there may be a need to augment the energy storage provision because the ability of the battery to retain charge decreases over time, perhaps being able to store between two thirds and three quarters of the energy it can store when new, as well as the internal resistance of the battery increasing over several years of operation due to chemical changes which result in a build-up of material on the cathode. Although, one option is to run the batteries down until they cease to operate, that would require all of the energy storage units to be replaced at that point. The alternative is to augment the energy storage available by providing some additional energy storage units, which may only need to be of the order of the 10% to 20% of the original voltage of the installed packs.

As previously explained, this cannot be done by simply connecting more additional energy storage units (illustrated by battery packs 7) in parallel with the primary energy storage units (illustrated by battery packs 2) already there, because the controller 4 will not be able to differentiate between the different ages of packs 2, 7 in terms of either discharging, by drawing current, or charging up. This results in the older battery packs being used up even more quickly and charged up even less because most of the charging current is taken by the newer battery packs 7 and charging stops when the newer packs are fully charged. To avoid this would mean charging at a very low rate, which is not practical with a vessel operating to a regular schedule, with limited turnaround times. The failure to charge the old packs 2 would simply accelerate the rate at which the older battery packs fail to provide sufficient voltage to reach their intended lifetime. Rather than achieving the desired augmentation of the existing battery packs, the addition of new ones could then result in those older ones failing entirely and needing to be completely replaced, at further expense.

As can be seen from Fig.2, the energy storage units 2, 7 are coupled to the bus 3 via switches 15. An old battery pack 2 can be represented by an internal resistance ri,a 10 in series with the old battery cells 11a and a new battery pack 7 can be represented by an internal resistance ri,b 12 in series with the new battery cells 11b. In order to be able to use the additional battery packs 7 to provide a higher proportion of the voltage to the loads 6 connected via bus 3, a pseudo resistance rp 13 is added in series with the cells 11b of the new battery pack 7. This increases the apparent internal resistance of the new energy storage unit, or battery pack 7. In order to ensure that the correct power balance is distributed between new battery packs 7 and old battery packs 2, that pseudo resistance 13 may be chosen to bring the internal resistance of some or all of the additional, or secondary, battery packs 7 to the same value as, or to a slightly lower value than, the internal resistance of each of the primary battery packs 2. By keeping the inner resistance slightly lower for battery packs 7, the aging can be accelerated in a controlled manner for the new battery packs 7. The use of the pseudo resistance makes it practical for the controller 4 to control the power going into or out of the old and new energy storage units 2, 7, via the bus 3, from the source 4, or to the loads 6.

The addition of a series pseudo internal resistance 13 is easily done as part of the circuitry of the new energy storage unit 57 and there is no need for specific adaptation of the remainder of the system 1. This has significant advantages over one alternative way of dealing with the imbalance in charging and discharging of the two, which is to add a converter to the switchboard of the system, to control the charging and discharging of the old and new battery packs separately. However, it can be difficult to interface the new converter with an existing system and adds costs and increases the time that the vessel is out of use during the upgrade. The pseudo resistance 13 allows another battery pack 7 to be added and the control is automatically effective, without any complicated changes to the overall system, so the addition can be done relatively quickly, during standard downtime of the vessel.

Typically, the amount of internal resistance rp provided by the pseudo resistance 13 is chosen such that the sum of the pseudo resistance rp, plus the inherent internal resistance ri,b, of the secondary battery pack 7, when new, is equal to the measured internal resistance ri,a of the old battery pack 2. In general, any difference in internal resistance of multiple old battery packs 2 is balanced out, in that when the internal resistance of one battery pack increases, the current or state of charge (SOC) variation is reduced for that pack and aging happens more slowly, whilst a neighbouring battery pack takes a higher current/SOC variation. The process of allocating pseudo resistance is flexible and can be adapted to the actual internal resistance of each battery pack, of different relative ages. In some cases, it may be desirable to achieve faster aging of the new battery packs 7, in which case, rather than having rp + ri,b equal to ri,a which gives substantially equal aging, rp + ri,b is chosen to be less than ri,a to encourage the new battery pack 7 to work harder. rp may also be a variable value, which the controller 4 can adjust remotely by a small amount during operation, so that as the primary energy storage units 2 continue to age and their internal resistance ri,a continues to increase, the pseudo resistance rp of the secondary energy storage units 7 is adapted by the controller 4 to maintain the desired ratio, or to alter that ratio, if required. A variable rp may typically be used if the purpose is to age the new battery to the maximum possible, whilst extending the life of the old battery to the maximum possible. For example, during charging, rp can be low as long as the SOC is low, but when the SOC gets higher then rp is increased to protect the new battery 7 against over voltage at the end of the charging.

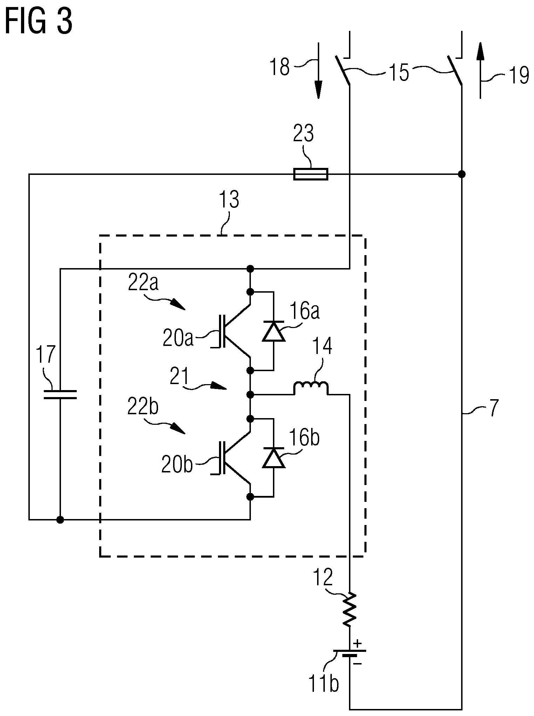

Fig.3 illustrates a first embodiment of a pseudo resistance 13, implemented in power electronics components. These components are used because adding real resistors to bring the internal resistance up to the same value as that of the older batteries would use power to such an extent that the amount available to supply the loads would be reduced. Power electronics can be chosen to have very low power consumption. The pseudo resistance 13 in this example comprises a power electronics circuit implemented by a semiconductor combination 21 comprising two semiconductor devices 20a, 20b, typically transistors, such as IGBTs in series, with a diode 16a, 16b in parallel with each device, thus forming two semiconductor diode pairs 22a, 22b. One end of an inductance 14 is connected between the two semiconductor diode pairs 22a, 22b and the other end in series with the battery cells 11b, with their inherent internal resistance 12. A capacitor 17 is provided in parallel across the semiconductor combination 21 to enable the transistors to operate as intended. During charging operations current flows from the main bus see, arrow 18, through a first switch 15 and fuse 23 to the semiconductor diode pair 22a, through the circuit and back to the bus 3 via a second switch 15, see arrow 19. When transistor 20a is OFF and transistor 20b of the other semiconductor pair 22b is ON, current is forced through capacitor 17 and diode 16b. The supply to the components comes from 18 and returns to 19 the terminals of the energy storage unit connected through the switches 15 to the bus. In a 1kV energy storage unit, the voltage drop may only average 10V, or effectively as little as 1%. During the 1% on time the voltage drop is 1000Vdc and for the rest of the time (off time) the voltage drop is 0 V dc, giving an average voltage drop of 10V. The inductor 14 limits the current increase/decrease in this interval and smooths the current. Having such a small average voltage drop requires one of the transistors to be on for a long period of time and the other for only a very short period of time, making the control of turn on, turn off times difficult.

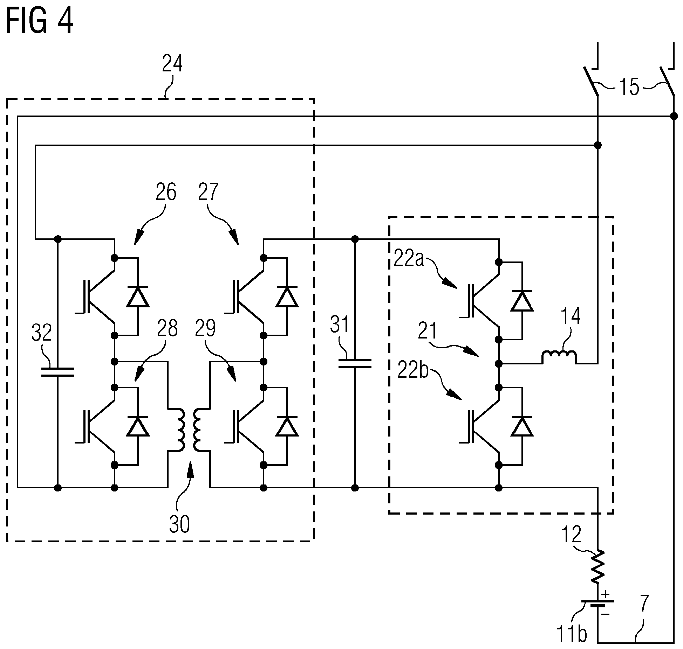

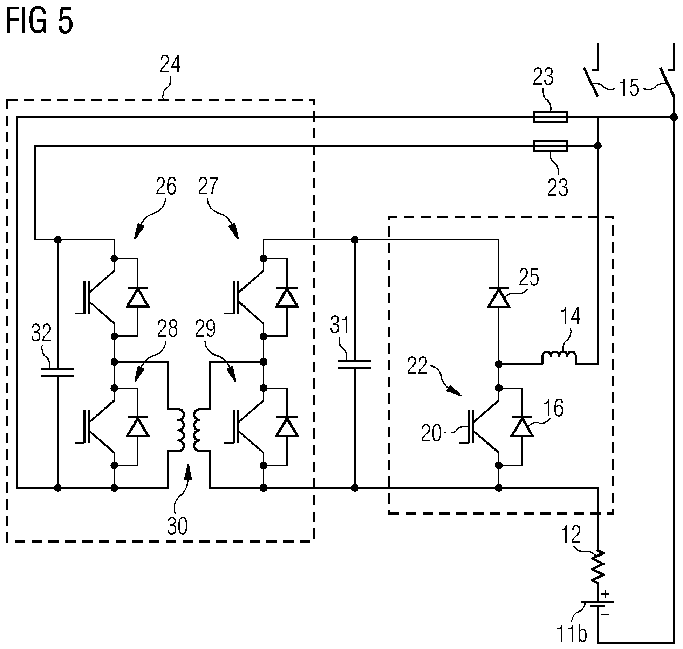

To address this problem, the circuitry may be augmented by providing galvanic isolation, as illustrated in Figs.4 and 5, whereby there is a step down from 1 kV to 100V or 50V, so that the voltage drop across the pseudo resistance circuitry is closer to 10%, rather than 1%, as with the embodiment of Fig.3. This makes it easier for the controller 4 to regulate the switching of the current flow. The galvanic isolation alters the design as shown.

In Fig. 4, two semiconductor pairs 22a, 22b in series comprising semiconductor devices 20a, 20b and diodes 16a, 16b, as shown in Fig.3, have one end of the inductor 14 connected between them and the other end of the inductor 14 connected via a switch 15 to the bus 3. The galvanic isolation is provided by a step-down circuit 24 comprising two semiconductor diode pairs in series 26, 28; 27, 29 either side of a transformer 30. Capacitors 31, 32 are connected across the pairs 26,28; 27,29. The two semiconductor diode pairs 22a, 22b of Fig.4 allow both charging and discharging to be controlled. Capacitor 31 is effectively connected in parallel across the semiconductor combination 21 too. The semiconductor pair 22b and inductor 14 forming the pseudo resistance, are connected to the battery cells 11b, with their inherent internal resistance 12. The advantage of the step down circuit 24 is that there is only a small voltage of typically between 50V and 100V, so regulation is simplified because the voltage drop is at least 10%, rather than only 1%, as was the case in the Fig.3 embodiment.

In charging mode, for the arrangement of Fig. 4, during the interval when transistor of 22a is ON, the battery current mainly flows through the inductor 14, through the diode of 22a, through the capacitor bank 31 and then into the battery 11b. During the interval when the transistor 22b is ON, the battery current flows through the inductor 14, through the transistor in 22b and then into the battery 11b. In discharging mode, during the interval when transistor 22a is ON, the battery current flows mainly from the battery 11b through the capacitor bank 31, through the transistor of 22a and through the inductor 14. During the interval when transistor 22b is ON, the battery current flows from the battery through the diode in 22b and through the inductor 14. During the interval when current flows through the capacitor bank 31, some small current also flows through the converter 24, the direction of this current being depending upon the direction of the current in the capacitor.

In Fig.5, instead of two semiconductor pairs 22a, 22b, a single semiconductor diode pair 22 comprising semiconductor device 20 and diode 16 is connected in series with a single diode 25. The inductor 14 is connected between the semiconductor diode pair 22 and the diode 25 and the opposite terminal of the semiconductor pair is this connected to the battery cells 11b, with their inherent internal resistance 12. As in Fig.4, the galvanic isolation is provided by a step-down circuit 24 comprising two semiconductor diode pairs in series 26, 28; 27, 29 either side of a transformer 30. Capacitors 31, 32 are connected across the pairs 26,28; 27,29. Fuses 23 are connected between each of the terminals and the voltage step-down converter 24. With only a diode 16 on one side, rather than the pair of semiconductor diode pairs of Fig.4, it is only possible to control charging, rather than being able to control both charging and discharging. However, the advantage is that the step down means only a small voltage, typically between 10V and 50V, is being controlled. A converter in the main switchboard would need to be able to operate at around 1000V, so any converter is operating at only 1% to 5% of the voltage that it would need to cope with, without the step down. This means that the equipment can be small, low cost and compact. In charging mode, for the arrangement of Fig.5, during the interval when the transistor 20 of pair 22 is OFF, the battery current mainly flows through the inductor 14, through the diode 25, through the capacitor bank 31 and then into the battery 11b. During the interval when the transistor 22 is ON, the battery current flows through the inductor 14, through the transistor 22 and then into the battery. In discharging mode, during the interval when transistor 22 is OFF or ON, the battery current flows from the battery through the diode 16 in semiconductor pair 22 and through the inductor 14. During the interval when current flows through the capacitor bank 31, some small current also flows through the converter 24, the direction of which depends upon the direction of the current in the capacitor.

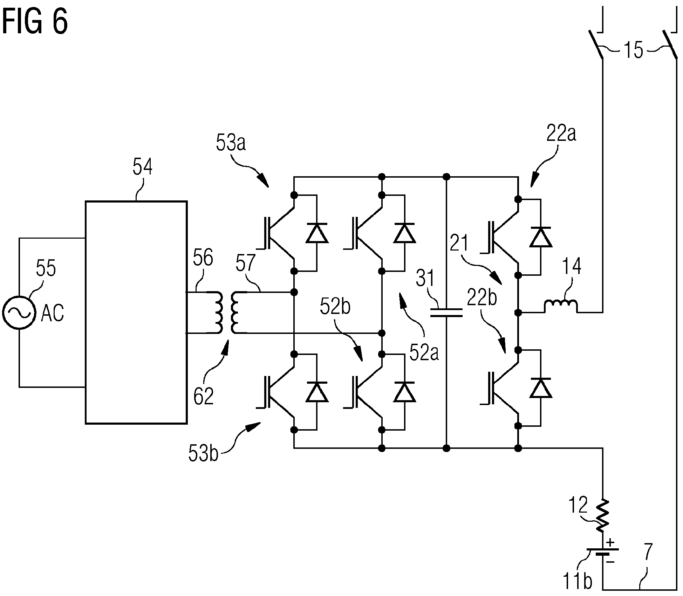

There may be circumstances in which it is necessary to connect to an external source or power grid, in which case it may be necessary to use a filter between the transformer and the source. Internal power is preferred, but with a combination of filtering, galvanic isolation and regulation, problems due to the behaviour of an external source and possible distortion of the sine wave can be dealt with. All principles are the same as for the examples of Figs.4 and 5, but the small current flowing through the DC/DC step down converter flows from an external source. This makes installation more complicated, but the design easier as the external source voltage can be a lower voltage, for example of the order of 100 to 440 Vac. An example of this is shown in Fig.6. An inductor 14 is connected between two semiconductor diode pairs 22a, 22b of a semiconductor diode combination 21, with a capacitor 51 connected in parallel across the combination 21. A source 55, in this example, a single-phase AC source, is connected through an optional filter 54 to one set of windings 56 of a transformer 62. One end of the other set of transformer windings 57 is connected between two series connected semiconductor diode pairs 52a, 52b of a first semiconductor diode combination and the other end of the other set of transformer windings 56 is connected between two series connected semiconductor diode pairs 53a, 53b of a second semiconductor diode combination. The first and second combinations are connected in parallel with capacitor 51, on the opposite side to the combination 21.

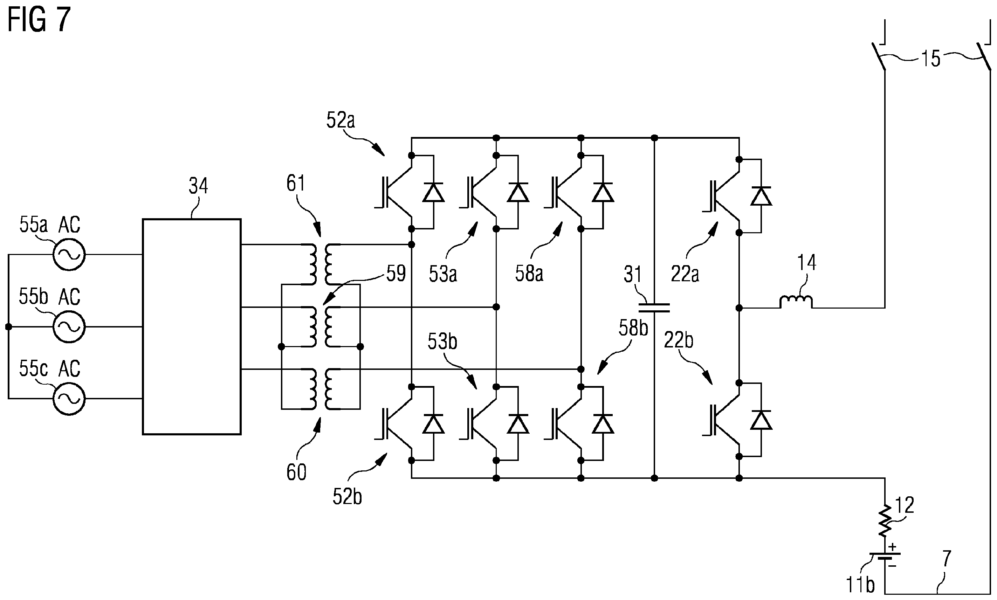

In charging mode, for the arrangement of Fig. 6, during the interval when transistor of 22a is ON, the battery current mainly flows through the inductor 14, through the diode of 22a, through the capacitor bank 31 and then into the battery 11b. During the interval when the transistor of 22b is ON, the battery current flows through the inductor 14, through the transistor in 22b and then into the battery 11b. In discharging mode, during the interval when the transistor of pair 22a is ON, the battery current flows mainly from the battery 11b through the capacitor bank 31, through the transistor of 22a and through the inductor 14. During the interval when transistor 22b is ON, the battery current flows from the battery through the diode in 22b and through the inductor 14. During the interval when current flows through the capacitor bank 31, some small current also flows through the converter, the direction of this current being depending upon the direction of the current in the capacitor. An example for a three-phase source is shown in Fig.7. One end of an inductor 14, connected at the other end via switch 15 to the bus 3, is connected between two semiconductor diode pairs 22a, 22b of a semiconductor diode combination 21, with a capacitor 30 connected in parallel across the combination 21. A source 55a, 55b, 55c, in this example, a three-phase AC source, is connected through an optional filter 54 to one set of windings 60 of a transformer 59. For each phase, one end of the other set of transformer windings 61 is connected between two series connected semiconductor diode pairs and the other end is connected to the windings of the next phase. There are three semiconductor diode combinations, the first semiconductor diode combination comprising semiconductor diode pairs 52a, 52b, the second comprising semiconductor diode pairs 53a, 53b and the third comprising semiconductor diode pairs 58a, 58b. The first, second and third combinations are connected in parallel with capacitor 30, on the opposite side to the combination 21. With the design of Fig.7, any change to the potential either side of the transformer 59 is replicated, but there is no common potential, just a proportionate change.

In charging mode, for the arrangement of Fig. 7, during the interval when the transistor of 22a is ON, the battery current mainly flows through the inductor 14, through the diode of 22a, through the capacitor bank 31 and then into the battery. During the interval when the transistor of 22b is ON, the battery current flows through the inductor 14, through the transistor of 22b and then into the battery 11b. In discharging mode, during the interval when transistor of 22a is ON, the battery current flows mainly from the battery 11b through the capacitor bank 31, through the transistor of 22a and through the inductor 14. During the interval when transistor of 22b is ON, the battery current flows from the battery through the diode in 22b and through the inductor 14. During the interval when current flows through the capacitor bank 31, some small current also flows through the converter 24, the direction of this current being depending upon the direction of the current in the capacitor.

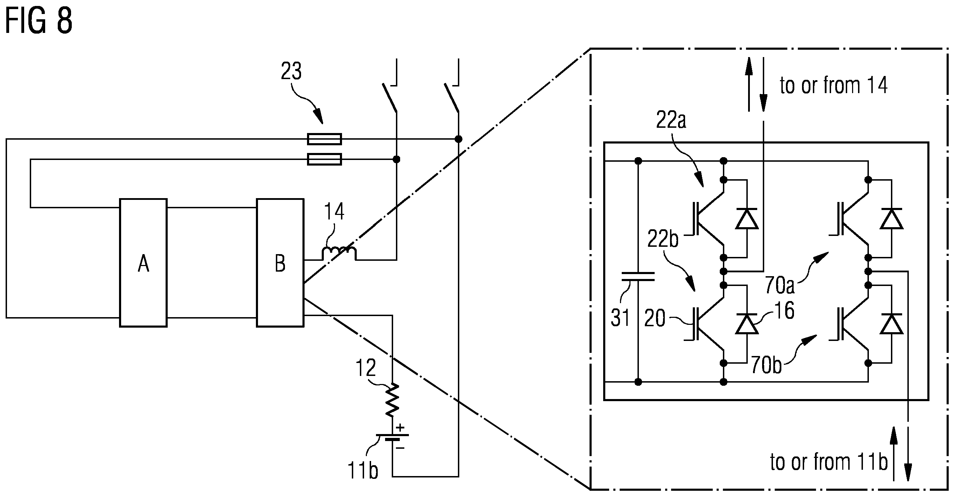

Figure 8 illustrates a further example, based on a modification of Fig.5, in order to be able to control both charging and discharging, rather than the discharging being not controllable. Instead of a single semiconductor diode pair 22 and a diode, two sets of semiconductor diode pairs are used 22a, 22b; 70a, 70b. Current may then flow to or from inductor 14 and to or from battery 11b. In charging mode, when the transistor of 22a is ON, or OFF, current flows through the inductor 14, through the diode of 22a, through the capacitor bank 31, through the diode of 70b to the battery. When the transistor of 22b is ON, the current flows through the inductor 14, through the transistor of 22b, through the diode of 70b, to the battery. For discharging, when the transistor of 70a is ON or OFF, the current flows from the battery, through the diode of 70a, if the transistor of 22a is OFF, then through the capacitor bank 31, through the diode 16 of 22b and through the inductor 14. When the transistor of 22a is ON, the current flows from the battery, through the diode of 70a, through the transistor of 22a and through the inductor 14.

Each of the various examples shown provides different ways to enable new energy storage units to be added into a system with existing energy storage units, where the internal resistance has increased over time and with use, as compared to the new units, thus enabling control of charging and/or discharging of all of the installed energy storage units to be done by the controller, without the need of a high voltage converter to deal with the different properties found in the old and new energy storage units.

Embodiments of the invention have been described with reference to different subject matter. In particular, some embodiments have been described with reference to method type claims whereas other embodiments have been described with reference to apparatus type claims. However, a person skilled in the art will gather from the above and the following description that, unless otherwise notified, in addition to any combination of features belonging to one type of subject matter, any combination of features relating to different subject matter, in particular between features of the method type claims and features of the apparatus type claims is considered to be disclosed by this document too.

It should be noted that the term "comprising" does not exclude other elements or steps and "a" or "an" does not exclude a plurality. Also, elements described in association with different embodiments may be combined. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. An electrical energy storage system (1) comprising a plurality of primary energy storage units (2), each primary energy storage unit comprising an inherent internal resistance; and one or more additional energy storage units, at least one additional energy storage unit further comprising a pseudo resistance; the system further comprising one or more controllers, for controlling charging and discharging of each of the primary and additional energy storage units; whereby control of charging and discharging of the or each additional energy storage unit comprising a pseudo resistance is distinguished from charging and discharging of each primary energy storage unit, and is distinguished from charging and discharging of any additional energy storage unit that lacks a pseudo resistance, **characterized in that** the pseudo resistance comprises a switching device (13), the switching device comprising first and second elements (22a, 22b) in series with one another to form a switching combination; a capacitor (17) connected across the switching combination; and a current limiter (14) connected to a midpoint (21) between the first and second elements.

2. A system according to claim 1, wherein each energy storage unit comprises two or more energy storage modules, each energy storage module contributing to the inherent internal resistance of the energy storage unit.

3. A system according to claim 1 or claim 2, wherein each additional energy storage unit comprises two or more energy storage modules, each energy storage module contributing to the inherent internal resistance of its additional energy storage unit.

4. A system according to any preceding claim, wherein each energy storage module comprises two or more energy storage devices, each energy storage device contributing to the inherent internal resistance of its energy storage module.

5. A system according to claim 1, wherein the first element comprises a semiconductor device in parallel with a diode.

6. A system according to claim 1 or claim 5, wherein the second element comprises at least one of a diode, or a semiconductor device in parallel with a diode.

7. A system according to any preceding claim, wherein the energy storage system further comprises galvanic isolation.

8. A system according to claim 7, wherein the galvanic isolation comprises a step down transformer between a module bus or a system bus and the switching device.

9. A system according to claim 7 or claim 8, wherein the galvanic isolation further comprises at least one pair of series connected elements on each side of the transformer, each element comprising a semiconductor device in parallel with a diode.

10. A system according to any of claims 7 to 9, wherein the galvanic isolation further comprises a capacitor connected across the pair of series connected elements on the higher voltage side of the transformer.

11. A system according to any of claims 7 to 10, wherein the galvanic isolation further comprises a filter between an external source and a higher voltage side of the transformer.

12. A method of operating an electrical energy storage system according to any preceding claim comprises determining internal resistance of each primary energy storage unit; determining internal resistance of at least one of the additional energy storage units; selecting a pseudo resistance for the at least one additional energy storage unit, such that the combined internal resistance and pseudo resistance of the at least one additional energy storage unit is substantially equal to the internal resistance of each of the primary energy storage devices; and charging the primary and additional energy storage units.

13. A method according to claim 12, wherein the method further comprises discharging and/or charging the additional energy storage units at a higher rate than discharging and/or charging the primary energy storage units.

## Patentansprüche

1. Elektrisches Energiespeichersystem (1), umfassend eine Vielzahl primärer Energiespeichereinheiten (2), wobei jede primäre Energiespeichereinheit einen inhärenten Innenwiderstand umfasst; und eine oder mehrere zusätzliche Energiespeichereinheiten, wobei mindestens eine zusätzliche Energiespeichereinheit ferner einen Pseudowiderstand umfasst; wobei das System ferner eine oder mehrere Steuerungen zum Steuern eines Ladens und eines Entladens jeder der primären und der zusätzlichen Energiespeichereinheiten umfasst; wobei das Steuern des Ladens und des Entladens der oder jeder zusätzlichen Energiespeichereinheit, die einen Pseudowiderstand umfasst, von dem Laden und dem Entladen jeder primären Energiespeichereinheit unterschieden wird und von dem Laden und dem Entladen einer beliebigen zusätzlichen Energiespeichereinheit, die eines Pseudowiderstands entbehrt, unterschieden wird, **dadurch gekennzeichnet, dass** der Pseudowiderstand eine Schaltvorrichtung (13) umfasst, wobei die Schaltvorrichtung erste und zweite Elemente (22a, 22b), die miteinander in Reihe geschaltet sind, um eine Schaltkombination zu bilden; einen Kondensator (17), der über die Schaltkombination verbunden ist; und einen Strombegrenzer (14), der mit einem Mittelpunkt (21) zwischen den ersten und den zweiten Elementen verbunden ist, umfasst.

2. System nach Anspruch 1, wobei jede Energiespeichereinheit zwei oder mehrere Energiespeichermodule umfasst, wobei jedes Energiespeichermodul zu dem inhärenten Innenwiderstand der Energiespeichereinheit beiträgt.

3. System nach Anspruch 1 oder Anspruch 2, wobei jede zusätzliche Energiespeichereinheit zwei oder mehrere Energiespeichermodule umfasst, wobei jedes Energiespeichermodul zu dem inhärenten Innenwiderstand seiner zusätzlichen Energiespeichereinheit beiträgt.

4. System nach einem der vorhergehenden Ansprüche, wobei jedes Energiespeichermodul zwei oder mehrere Energiespeichervorrichtungen umfasst, wobei jede Energiespeichervorrichtung zu dem inhärenten Innenwiderstand ihres Energiespeichermoduls beiträgt.

5. System nach Anspruch 1, wobei das erste Element eine Halbleitervorrichtung parallel zu einer Diode umfasst.

6. System nach Anspruch 1 oder Anspruch 5, wobei das zweite Element mindestens eine einer Diode oder einer Halbleitervorrichtung parallel zu einer Diode umfasst.

7. System nach einem der vorhergehenden Ansprüche, wobei das Energiespeichersystem ferner eine galvanische Trennung umfasst.

8. System nach Anspruch 7, wobei die galvanische Trennung einen Abwärtstransformator zwischen einem Modulbus oder einem Systembus und der Schaltvorrichtung umfasst.

9. System nach Anspruch 7 oder Anspruch 8, wobei die galvanische Trennung ferner mindestens ein Paar in Reihe geschalteter Elemente auf jeder Seite des Transformators umfasst, wobei jedes Element eine Halbleitervorrichtung parallel zu einer Diode umfasst.

10. System nach einem der Ansprüche 7 bis 9, wobei die galvanische Trennung ferner einen Kondensator umfasst, der über das Paar in Reihe geschalteter Elemente auf der Seite mit höherer Spannung des Transformators verbunden ist.

11. System nach einem der Ansprüche 7 bis 10, wobei die galvanische Trennung ferner einen Filter zwischen einer externen Quelle und einer Seite mit höherer Spannung des Transformators umfasst.

12. Verfahren zum Betreiben eines elektrischen Energiespeichersystems nach einem der vorhergehenden Ansprüche, umfassend Bestimmen eines Innenwiderstands jeder primären Energiespeichereinheit; Bestimmen eines Innenwiderstands mindestens einer der zusätzlichen Energiespeichereinheiten; derartiges Auswählen eines Pseudowiderstands für die mindestens eine zusätzliche Energiespeichereinheit, dass der kombinierte Innenwiderstand und Pseudowiderstand der mindestens einen zusätzlichen Energiespeichereinheit im Wesentlichen gleich dem Innenwiderstand jeder der primären Energiespeichervorrichtungen ist; und Laden der primären und der zusätzlichen Energiespeichereinheiten.

13. Verfahren nach Anspruch 12, wobei das Verfahren ferner Entladen und/oder Laden der zusätzlichen Energiespeichereinheiten mit einer höheren Rate als Entladen und/oder Laden der primären Energiespeichereinheiten umfasst.

## Revendications

1. Système de stockage d'énergie électrique (1) comprenant une pluralité d'unités de stockage d'énergie primaires (2), chaque unité de stockage d'énergie primaire présentant une résistance interne inhérente ; et une ou plusieurs unités de stockage d'énergie supplémentaires, au moins une unité de stockage d'énergie supplémentaire comprenant en outre une pseudo-résistance ; le système comprenant en outre un ou plusieurs dispositifs de commande, pour commander la charge et la décharge de chacune des unités de stockage d'énergie primaires et supplémentaires ; moyennant quoi la commande de la charge et de la décharge de l'unité ou de chaque unité de stockage d'énergie supplémentaire comprenant une pseudo-résistance se distingue de la charge et de la décharge de chaque unité de stockage d'énergie primaire, et se distingue de la charge et de la décharge de toute unité de stockage d'énergie supplémentaire dépourvue de pseudo-résistance, **caractérisé en ce que** la pseudo-résistance comprenne un dispositif de commutation (13), le dispositif de commutation comprenant un premier et un second élément (22a, 22b) reliés en série l'un avec l'autre pour former une combinaison de commutation ; un condensateur (17) monté aux bornes de la combinaison de commutation ; et un limiteur de courant (14) relié à un point médian (21) entre le premier et le second élément.

2. Système selon la revendication 1, dans lequel chaque unité de stockage d'énergie comprend au moins deux modules de stockage d'énergie, chaque module de stockage d'énergie contribuant à la résistance interne inhérente de l'unité de stockage d'énergie.

3. Système selon la revendication 1 ou la revendication 2, dans lequel chaque unité de stockage d'énergie supplémentaire comprend au moins deux modules de stockage d'énergie, chaque module de stockage d'énergie contribuant à la résistance interne inhérente de son unité de stockage d'énergie supplémentaire.

4. Système selon l'une quelconque des revendications précédentes, dans lequel chaque module de stockage d'énergie comprend au moins deux dispositifs de stockage d'énergie, chaque dispositif de stockage d'énergie contribuant à la résistance interne inhérente de son module de stockage d'énergie.

5. Système selon la revendication 1, dans lequel le premier élément comprend un dispositif à semi-conducteur en parallèle avec une diode.

6. Système selon la revendication 1 ou la revendication 5, dans lequel le second élément comprend au moins un élément parmi une diode et un dispositif à semi-conducteur en parallèle avec une diode.

7. Système selon l'une quelconque des revendications précédentes, dans lequel le système de stockage d'énergie comprend en outre une isolation galvanique.

8. Système selon la revendication 7, dans lequel l'isolation galvanique comprend un transformateur abaisseur entre un bus de module ou un bus de système et le dispositif de commutation.

9. Système selon la revendication 7 ou la revendication 8, dans lequel l'isolation galvanique comprend en outre au moins une paire d'éléments reliés en série de part et d'autre du transformateur, chaque élément comprenant un dispositif à semi-conducteur en parallèle avec une diode.

10. Système selon l'une quelconque des revendications 7 à 9, dans lequel l'isolation galvanique comprend en outre un condensateur monté aux bornes de la paire d'éléments reliés en série du côté tension supérieure du transformateur.

11. Système selon l'une quelconque des revendications 7 à 10, dans lequel l'isolation galvanique comprend en outre un filtre entre une source externe et un côté tension supérieure du transformateur.

12. Procédé de fonctionnement d'un système de stockage d'énergie électrique selon l'une quelconque des revendications précédentes, comprenant la détermination de la résistance interne de chaque unité de stockage d'énergie primaire ; la détermination de la résistance interne d'au moins l'une des unités de stockage d'énergie supplémentaires ; la sélection d'une pseudo-résistance pour l'au moins une unité de stockage d'énergie supplémentaire, de sorte que la résistance interne et la pseudo-résistance combinées de l'au moins une unité de stockage d'énergie supplémentaire soient sensiblement égales à la résistance interne de chacun des dispositifs de stockage d'énergie primaires ; et la charge des unités de stockage d'énergie primaires et supplémentaires.

13. Procédé selon la revendication 12, dans lequel le procédé comprend en outre la décharge et/ou la charge des unités de stockage d'énergie supplémentaires à un régime supérieur à la décharge et/ou à la charge des unités de stockage d'énergie primaires.
